# FASCICULE DE BREVET EUROPEEN

(11) **EP 3 157 781 B1**
(45) Date de publication et mention de la délivrance du brevet: **11.09.2019**
(21) Numéro de dépôt: 15736557.8
(22) Date de dépôt: 17.06.2015
(51) Int. Cl.: B60P 1/36, B60P 1/52, B60P 7/15

(54) **DISPOSITIF DE CHARGEMENT ET DE DÉCHARGEMENT DE CAISSES D'UN FOURGON**
VORRICHTUNG ZUM BE- UND ENTLADEN VON SCHACHTELN AUS EINEM LIEFERWAGEN
DEVICE FOR LOADING AND UNLOADING BOXES FROM A VAN

(30) Priorité: 17.06.2014 FR 1455562
(43) Date de publication de la demande: 26.04.2017
(73) Titulaire: Gruau Laval, 53940 Saint-Berthevin (FR)
(72) Inventeur: BOSCHER, David, F-35130 La Guerche De Bretagne (FR)
(74) Mandataire: Vidon Brevets & Stratégie
(86) Numéro de dépôt international: PCT/FR2015/051600
(87) Numéro de publication internationale: WO 2015/193613

(56) Documents cités:
- DE-A1- 4 335 478
- DE-U1- 29 802 774
- FR-A1- 2 344 420
- FR-A1- 2 483 340
- JP-A- S5 953 240
- US-A- 3 333 715
- US-A- 3 722 717
- US-A- 3 998 343
- US-A- 4 111 318
- US-A- 4 231 695
- US-A- 5 054 295

## Description

### 1. Domaine de l'invention

L'invention concerne un dispositif pour charger et décharger des caisses d'un fourgon. L'invention s'applique notamment dans le cas où les caisses sont destinées à être livrées à domicile par un manutentionnaire.

### 2. Art antérieur

De nombreux véhicules utilitaires permettent le transport de marchandises. Ces véhicules comportent une cabine pour le pilotage et un volume de chargement. L'accès à ce volume de chargement s'effectue par le coté, généralement par une porte coulissante, ou par l'arrière. Le volume de chargement est accessible par une porte rideau ou, une ou deux portes pivotantes, soit à l'arrière, soit sur le coté. Généralement, la largeur intérieure de la porte est quasiment égale à celle de l'intérieur du volume de chargement. De cette façon, il est possible de charger des colis volumineux à l'aide d'un chariot élévateur, en les montant à la hauteur du plancher, puis un manutentionnaire pousse les colis dans le volume de chargement en commençant par le fond, c'est à dire le plus près possible de la cabine. Pour faciliter l'opération, des chariots sont parfois utilisés pour charger le véhicule à partir d'un quai d'entrepôt.

Des véhicules isothermes sont employés pour transporter des produits frais. Pour cela, certains véhicules utilitaires sont dotés de plusieurs compartiments permettant de transporter des denrées alimentaires à des températures différentes. Dans ce cas, des compartiments spécifiques fermés par des portes isothermes sont aménagés dans le volume de chargement. Généralement, les compartiments à basse température destinés à transporter des denrées congelées ont une petite capacité. Le volume de chargement accessible directement par la porte extérieure peut être maintenu à une température fraiche, pour le transport des légumes et des fruits par exemple.

Dans de tels véhicules, il est important de laisser ouverte la porte le moins longtemps possible de façon à ne pas modifier la température intérieure. Pour cela, le chargement est préparé sur le quai d'embarquement et le véhicule est approché à proximité immédiate de celui-ci de façon qu'un manutentionnaire transporte des groupes de colis à l'aide d'un chariot élévateur, de chariots ou de palettes dotées de roues. Le quai d'embarquement est aménagé pour être quasiment à la même hauteur que le plancher du véhicule. Selon une variante, le plancher du véhicule comporte des rouleaux disposés transversalement au véhicule. Un manutentionnaire présente l'ouverture du véhicule à proximité du quai d'embarquement, et pousse les colis sur les rouleaux. Dans tous les cas, le chargement peut s'effectuer en poussant l'ensemble des colis du quai vers le volume de chargement.

Pour faciliter la livraison et limiter le temps d'ouverture de la porte extérieure, les colis à livrer en dernier sont ceux placés contre la cabine, et ceux à livrer en premier sont placés en dernier, tout près de la porte. Les premiers colis sont facilement préhensibles par le manutentionnaire à l'extérieur du véhicule. Mais les derniers nécessitent d'aller les chercher au fond et donc de s'introduire dans le volume de chargement. Lors de la livraison, le manutentionnaire n'est pas sur un quai et se trouve souvent devant le domicile d'un particulier. Il doit donc enjamber la hauteur entre le sol et le plancher, et une fois à l'intérieur, déplacer les colis du fond vers l'ouverture, descendre du véhicule et prendre un à un les colis pour les placer sur un chariot mobile et les apporter à leurs destinataires. Ces opérations sont longues, répétitives, et perturbe la température qui doit rester constante dans le volume de chargement. De plus, ces manutentions génèrent de la fatigue physique et peuvent provoquer des troubles musculeux-squelettiques.

De plus, si les colis ne sont pas bien calés, ils peuvent bouger et tomber dans le véhicule, et occasionner des casses de produits. Lorsque des empilements de colis sont supprimés au fur et à mesure des livraisons, des espaces libres se dégagent et les colis peuvent bringuebaler au cours du transport, s'ils ne sont pas arrimés. Pour les livraisons à domicile, le temps est très réduit et les livreurs n'ont pas le temps d'arrimer les colis. C'est pourquoi des casses de produits interviennent fréquemment.

Le document FR 2 344 420 - PEPSICO publié le 14 octobre 1977, décrit la stabilisation des marchandises transportées dans un camion par des moyens de retenue mobiles qui s'appliquent sur la partie supérieure du chargement. Le système de blocage comporte des plaques horizontales fixées par des support en U qui entrent en contact avec le dessus des marchandises et qui les bloquent.

Le document US 3 333 715 - HEPBURN publié le 1 Août 1967, décrit une remorque reliée à un tracteur destinée à transporter des colis. Des rouleaux sont disposés sur le plancher de la remorque et tirés à l'aide d'une chaîne pour déplacer vers la sortie les colis en les faisant rouler.

Le document DE 43 35 478 - EUROP publié le 20 Avril 1995, décrit un moyen de fixation des marchandises transportées par un camion, à l'aide de barres verticales fixées entre le plancher et le toit. Ces barres s'avancent vers l'avant du véhicule pour bloquer les marchandises et les empêcher de basculer vers l'arrière.

Le document FR 2 483 340 - ROUILLE publié le 4 Décembre 1981, décrit un véhicule de transport possédant un plateau mouvant pour déplacer d'avant en arrière le chargement, et ainsi l'amener à l'arrière du véhicule pour être déchargé. Le plateau est constitué de traverses roulants sur des galets et animé par un moteur.

Le document US 5 054 295 - GOULOOZE publié le 8 Octobre 1991, décrit le transport de marchandises soumises à un contrôle de la température. Pour cela, un véhicule est divisé en logements régulés en température et dotés de porte (sur le coté ou à l'arrière).

La présente invention propose un dispositif facilitant le déchargement des colis d'un véhicule utilitaire en diminuant les efforts musculaires fournis par un manutentionnaire et tout en diminuant le temps de déchargement. De plus, la présente invention permet aussi de maintenir les caisses au cours du transport.

### 3. Objectifs de l'invention

La présente invention propose un nouveau moyen pour décharger des colis entre le volume de chargement d'un véhicule et un quai d'embarquement et/ou de livraison.

### 4. Exposé de l'invention

A cet effet, l'invention concerne un véhicule destiné à transporter des caisses dans un volume de chargement, lesdits caisses étant empilées sur au moins un chariot à roulettes coopérant avec au moins un rail de roulement fixé sur le plancher pour guider le déplacement dudit chariot, le véhicule comportant au moins un dispositif exerçant une force horizontale sur une file de caisses posées sur au moins un chariot pour les déplacer vers une ouverture du véhicule. Le véhicule comporte en outre au moins une barre de toit maintenant en partie supérieure au moins un empilement de caisses posées sur un chariot.

De cette manière, le déchargement du volume de chargement est facilité, la livraison est rapide et demande moins d'efforts physiques au manutentionnaire. De plus, la structure assure un bon maintien des caisses dans le volume de chargement, évitant ainsi de la casse au cours du transport.

Selon un premier mode de réalisation, la barre de toit est destinée à bloquer un empilement de caisses vides et emboitées les unes dans les autres, la distance entre le plancher du véhicule et ladite barre de toit étant légèrement supérieure à la somme des hauteurs d'un chariot et d'un nombre déterminé de caisses vides et emboitées les unes dans les autres.

Selon un autre mode de réalisation, la barre de toit est destinée à bloquer un empilement de caisses posées les unes sur les autres avec le couvercle refermé, la distance entre le plancher du véhicule et ladite barre de toit étant légèrement supérieure à la somme des hauteurs d'un chariot et d'un nombre déterminé de caisses posées les unes sur les autres avec le couvercle refermé.

Selon l'invention, le véhicule comporte au moins une barre anti-devers fixée horizontalement sur la longueur d'au moins une paroi intérieure du volume de chargement, les caisses présentant au moins un longeron longitudinal s'étendant sur le coté et le dessus, la barre anti-devers venant crocheter ledit longeron par le dessus.

Selon un autre mode de réalisation, la barre anti-devers crochète des caisses posées les unes sur les autres avec le couvercle refermé, la hauteur de la barre anti-devers se situant à une hauteur égale à la somme des hauteurs d'un chariot et d'un nombre déterminé de caisses posées les unes sur les autres avec le couvercle refermé.

Selon un autre mode de réalisation, le dispositif exerçant une force horizontale sur une file de caisses posées sur au moins un chariot est une butée mobile glissant dans un rail de guidage fixé au plancher du volume de chargement et venant en contact avec un chariot ou une caisse posée dessus, ladite butée mobile se déplaçant au moyen d'une sangle vers l'ouverture du véhicule.

Selon un autre mode de réalisation, le véhicule comporte des éléments de blocage de ladite sangle à proximité de l'ouverture, afin de maintenir en tension la sangle selon une direction longitudinale au véhicule lorsque ladite butée mobile vient en contact sur un chariot ou une caisse posée dessus qui vient lui-même buter contre une butée fixe présente à proximité de l'ouverture du véhicule.

Selon un autre mode de réalisation, le volume de chargement comporte au moins deux rails de roulement destinés à guider les roulettes soit gauches soit droites de deux files de chariots.

Selon un autre mode de réalisation, le véhicule comporte une rampe d'accès se posant à l'arrière du véhicule afin de prolonger le plancher jusqu'au quai de chargement, la dite rampe d'accès comportant des éléments droits prolongeant les rails de roulement présents dans le volume de chargement.

Selon un autre mode de réalisation, le volume de chargement comporte deux parties ayant des planchers à des hauteurs différentes, ladite rampe d'accès étant constituée de deux plateformes, chacune venant se poser sur chaque plancher des deux parties du volume de chargement et se prolongeant pour se poser sur le quai de chargement, les deux plateformes ayant des pentes différentes pour compenser la différence de hauteur des planchers.

Selon un autre mode de réalisation, le véhicule comporte un compartiment ambiant contenant une pluralité de files de caisses, un compartiment frais contenant une seule file de caisses, le dit compartiment frais ayant une hauteur inférieure à la hauteur du compartiment ambiant, et un tiroir placé au dessus du compartiment frais dont le contenu est accessible en le tirant vers l'arrière du véhicule.

Selon un autre aspect, l'invention concerne un procédé de déchargement d'un véhicule qui est décrit selon l'un des paragraphes précédent et qui comporte une porte arrière donnant accès à l'arrière des files de caisses et une porte latérale donnant accès à l'avant des files de caisses. Le procédé consiste à décharger au moins un empilement de caisses pleines par l'arrière du véhicule, à déplacer au moins une file de caisses vers l'arrière d'au moins la longueur d'un empilement et d'introduire des caisses vides par la porte latérale pour les placer à l'emplacement ainsi libéré à l'avant de la file déplacée.

Selon un autre mode de réalisation, les caisses vides sont emboitées les unes dans les autres formant un empilement ayant un nombre de caisses au moins égal au double du nombre de caisses pleines dans un empilement. La file de caisses vides se place à cheval sur les rails de roulement de deux files de caisses pleines et les empilements de caisses vides sont maintenus par la barre de toit.

### 5. Liste des figures

D'autres caractéristiques et avantages de l'invention apparaîtront maintenant avec plus de détails dans le cadre de la description qui suit d'exemples de réalisation donnés à titre illustratif et non-limitatif en se référant aux figures annexées qui représentent :
- la figure 1 présente un schéma d'un véhicule utilitaire vu de profil selon un exemple de réalisation,
- la figure 2 montre un empilement de caisses chargées à l'arrière d'un véhicule de type utilitaire, selon un exemple de réalisation,
- la figure 3 représente un schéma d'un volume de chargement vu du dessus, en montrant les éléments fixés sur le sol,
- la figure 4 montre les détails d'une rampe vue de profil, ladite rampe étant dotée d'une double pente,
- la figure 5 montre les détails d'une rampe vue du dessus selon un exemple de réalisation,
- la figure 6 montre les détails d'une rampe vue en perspective selon le même exemple de réalisation,
- la figure 7 montre un détail de la navette et sa coopération avec les chariots à roulettes,
- la figure 8 montre les détails des barres anti-devers et des barres de toit destinées à bloquer les caisses posées sur les chariots
- la figure 9 montre une variante d'implémentation des barres de transport et des deux barres de toit,
- Les figures 10.a, 10.b, 10.c 10.d et 10.e. décrivent le contenu d'un véhicule au cours d'un déchargement, illustrant les étapes d'une procédure de déchargement,
- la figure 11 montre l'organisation des différents compartiments du volume de chargement selon un exemple de réalisation.

### 6. Description d'un mode de réalisation de l'invention

### 6.1 Principe général

L'invention concerne un véhicule destiné à transporter des caisses dans un volume de chargement, lesdits caisses étant empilées sur au moins un chariot à roulettes coopérant avec au moins un rail de roulement fixé sur le plancher pour guider le déplacement dudit chariot, le véhicule comportant au moins un dispositif exerçant une force horizontale sur une file de caisses posées sur au moins un chariot pour les déplacer vers une ouverture du véhicule. Le véhicule comporte en outre au moins une barre de toit maintenant en partie supérieure au moins un empilement de caisses posées sur un chariot. La présence d'une barre de toit assure un bon maintien des caisses dans le volume de chargement, évitant ainsi de la casse au cours du transport.

### 6.2 Description d'un mode de réalisation

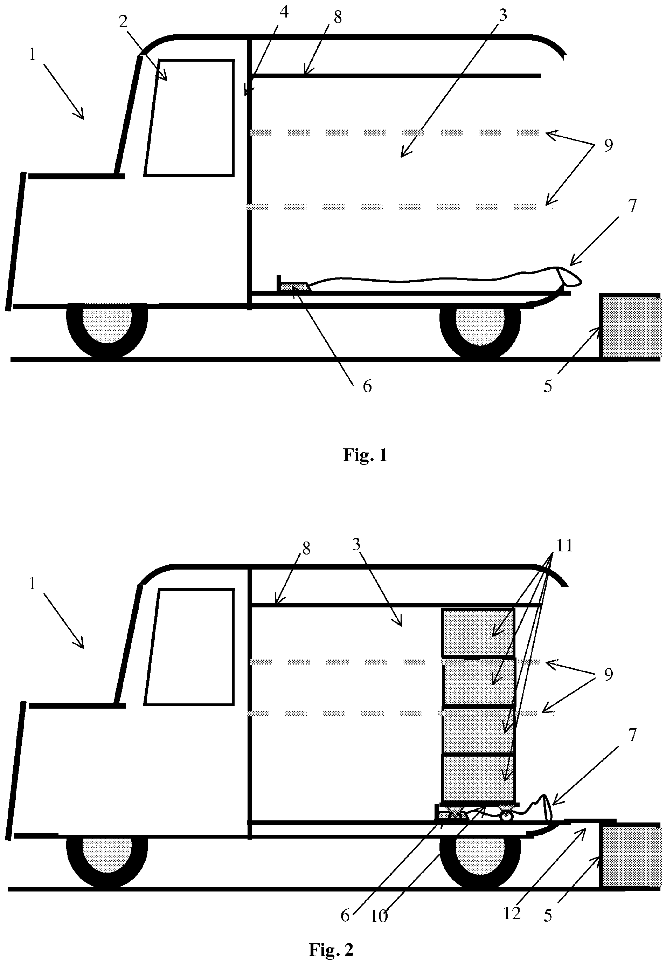

La **FIG.1** illustre un schéma d'un véhicule utilitaire 1 vu sur le coté destiné à effectuer des livraisons fréquentes, selon un exemple de réalisation de l'invention. De façon générale, le véhicule comporte une cabine 2 et un volume de chargement 3 destiné à recevoir des caisses, ce volume étant de forme parallélépipédique. La cabine 2 et le volume de chargement 3 sont séparés par une paroi 4. Les caisses peuvent être des denrées alimentaires pour lesquels la chaîne du froid doit être respectée. De ce fait, le véhicule utilitaire est équipé d'au moins un compartiment isolé thermiquement. Si le chargement comporte des caisses à maintenir à des températures différentes, le véhicule peut être équipé de 3 types de compartiments par exemple : l'un à température ambiante, un autre maintenu à une température fraiche (2 à 4 °C), et un troisième à une température de congélation (-20°C), les deux dernières températures étant maintenues dans de petits volumes fermés par des portes isothermes.

Selon l'invention, un manutentionnaire amène le véhicule en marche arrière à proximité immédiate d'un quai d'embarquement et/ou de livraison 5, et pousse du quai dans le véhicule les caisses empilées sur des chariots à roulettes. Un tel chariot est constitué d'un plateau rectangulaire surmonté par des roulettes montées pivotantes sur un axe, qualifiées en cela de « folle ». Une butée coulissante appelée « navette » préalablement positionnée à l'arrière du véhicule glisse entre deux rails de guidage prévus à cet effet. Cette navette se présente schématiquement comme une pièce en L, la branche horizontale étant maintenue entre les deux rails de guidage et la branche verticale, qui dépasse au-dessus des rails de guidage, vient buter contre le plateau d'un chariot à roulettes ou une caisse posée dessus. Une sangle 7 est attachée à la navette pour permettre à un opérateur de ramener celle-ci vers l'ouverture arrière du véhicule.

Selon l'invention, au moins une barre horizontale 8, dite « barre de toit » est fixée sous le toit du véhicule à l'intérieur. Cette barre de toit maintient les caisses placées en haut des empilements, et les empêche de basculer lors du transport. La hauteur de la barre de toit 8 est calculée pour qu'un nombre maximum de caisses empilées passent sous cette barre et l'affleure. L'espace entre le dessus de la plus haute caisse et la face inférieure de la barre 8 est de l'ordre d'un centimètre. La barre de toit est positionnée de façon à être à la verticale du segment coupant le milieu de la caisse située en dessous, le positionnement de cette caisse étant assuré par un moyen de guidage présent au niveau du plancher du volume de chargement. Les caisses sont empilées les unes sur les autres sur un chariot, et les empilements sont alignés et chargés par l'arrière du véhicule. Si le volume de chargement comporte plus d'une file de caisses accessibles à partir de l'ouverture, alors un nombre égal de barres 8 peut être fixées au toit. Selon un autre perfectionnement, pour améliorer la stabilité des caisses lors du transport, les empilements sont maintenus par une pluralité de barres anti-devers 9 plaquées sur les cloisons latérales, à gauche et à droite du volume 3 de chargement. Avantageusement, la barre de toit ne couvre pas toute la longueur du volume de chargement. A un endroit dont la longueur est approximativement égale à celle d'une caisse, la barre s'interrompt permettant à l'opérateur de basculer l'empilement de caisses et de les extraire facilement. Si un empilement doit être placé à cet endroit, alors les caisses sont maintenues par des moyens classiques d'arrimage. En les poussant, les caisses quittent cet endroit et se positionnent sous la barre de toit.

La **Fig. 2** montre un empilement de caisses 11 chargées à l'arrière d'un véhicule de type utilitaire, les caisses étant posées sur des chariots à roulettes 10 et chargées par l'ouverture arrière du véhicule. Un minimum de distance est laissée entre l'arrière du véhicule 1 et le bord du quai d'embarquement 5. L'opérateur positionne une rampe d'embarquement 12 pour prolonger le plancher du volume de chargement 3 jusque sur le quai. Cette rampe dont nous verrons des détails par la suite, est une plaque sensiblement plane qui se range dans un espace aménagé entre les barres anti-devers 9 et la paroi du véhicule. La rampe prolonge les chemins de roulement présents dans le véhicule pour les faire sortir à l'arrière. De cette façon, un opérateur peut préparer le chargement sur le quai en empilant un certain nombre de caisses 11 sur des chariots à roulettes jusqu'à une hauteur maximale, typiquement 1,80 mètres, cette hauteur étant définie par les dimensions intérieures du véhicule. Si un seul chariot ne suffit pas, l'opérateur peut empiler les caisses 11 sur plusieurs chariots pour former des files, par exemple deux files de quatre chariots à roulettes supportant chacun cinq caisses.

En poussant dans le véhicule un empilement de caisses, le chariot à roulettes vient en contact avec la branche verticale de la navette et la repousse vers l'avant du véhicule. Lorsque l'opérateur veut décharger les caisses par l'ouverture arrière du véhicule, il lui suffit de tirer sur la sangle 7 pour ramener vers l'arrière la navette et les empilements de caisses.

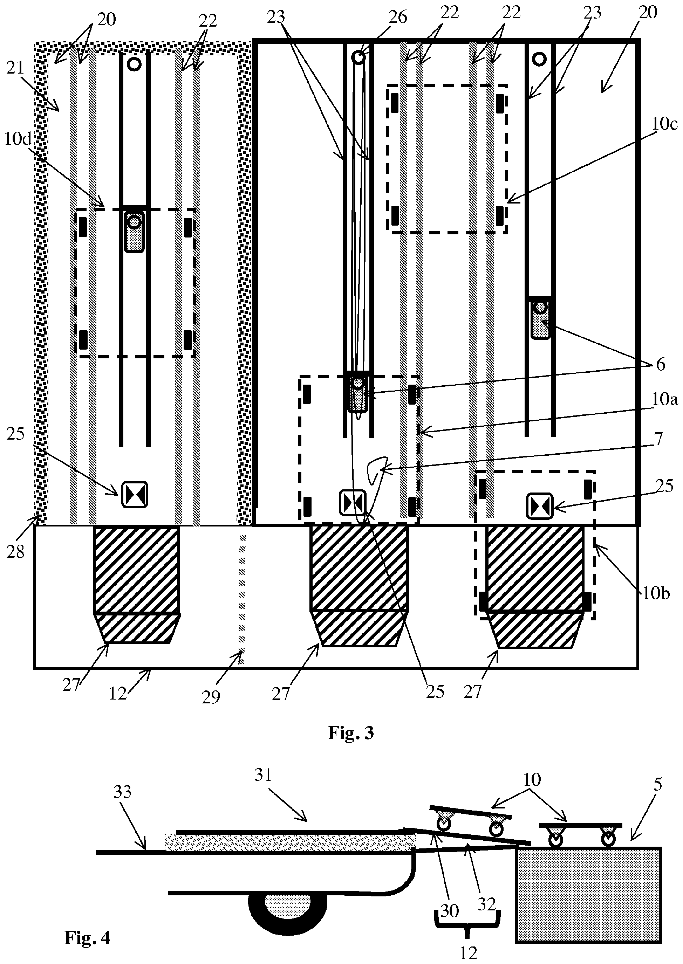

La **Fig. 3** représente un schéma d'un volume de chargement vu du dessus, en montrant les éléments fixés sur le sol. Selon un exemple de réalisation, le volume de chargement comporte un compartiment 20 dit « ambiant » destiné à contenir deux files de caisses empilées sur des chariots et un autre compartiment 21 dit « frais » contenant une seule file de caisses placées dans un environnement réfrigéré. La fermeture des compartiments s'effectue en refermant la porte arrière du véhicule(non représentée). L'une des deux portes comportant un panneau isolé permettant d'isoler thermiquement le compartiment froid 21.

La **Fig. 3** montre quatre chariots 10 disposés à différents endroits. Pour les trois files, les roulettes des chariots s'engagent dans un rail 22 de roulement formé par deux profilés rectilignes de quelques centimètres de haut et se prolongeant sur la longueur du compartiment. Dans la mesure où les roulettes sont montées pivotantes sur un axe, le rail de roulement 22 guide en ligne droite les chariots 10 et les positionne précisément dans les compartiments du volume de chargement 3. Avantageusement, un seul rail de roulement 22 est installé par file de chariots dans le compartiment ambiant. Les roulettes du coté qui ne possède pas de rails n'ont pas besoin d'être guidées. De cette manière, le compartiment comporte un nombre minimal d'éléments au sol ce qui limite les obstacles et facilite les déplacements d'un opérateur et allège la structure permettant d'augmenter la capacité de chargement.

Selon un exemple de réalisation, le compartiment ambiant dispose de deux rails de roulement 22 associés à deux files de chariots. En regardant le véhicule par l'arrière, le rail de roulement situé à gauche guide les roulettes droites des chariots de la file gauche et le rail situé à droite guide les roulettes gauches des chariot de la file droite. La **Fig. 3** montre le chariot 10a sur la file de gauche et le chariot 10b sur la file droite. Les deux rails peuvent également guider des chariots formant une troisième file de chariots se positionnant à cheval sur les première et seconde files, le chariot 10c est positionné sur cette troisième file. Les roulettes droites et gauches des chariots positionnés sur cette troisième file viennent en butée contre un des profilés rectilignes constituant les rails de roulement 22 des files droite et gauche. Ainsi, les roulettes gauches sont guidées par le profilé gauche du rail de roulement de la file gauche, et les roulettes droites sont guidées par le profilé droit du rail de roulement de la file droite. D'autres dispositions sont possibles, par exemple, celui où le positionnement des rails permet que les roulettes des chariots de la troisième file roulent dans les rails 22 et non à coté. Comme nous le verrons par la suite, cette troisième file est destinée à recevoir des chariots sur lesquels des caisses vides sont empilées.

Chaque file de chariots dispose de sa navette 6 glissant dans sa rainure 23. Les rainures 23 sont plus courtes que les rails de roulement 22 car la navette se déplace normalement de l'ouverture jusqu'à une distance de l'ouverture de l'ouverture du véhicule égale à la largeur d'un chariot. Pour diminuer l'effort de traction exercé par l'opérateur, un système de démultiplication 26 à base de poulies est mis en place au niveau de la sangle 7. Un système de blocage 25 positionné sur l'axe de chaque rainure 23 et à proximité de l'ouverture du véhicule, permet de maintenir la sangle 7 en tension et ainsi de maintenir la navette en contact avec un chariot lors du transport, de façon à bloquer la file de chariots. Ce système de blocage 25 est par exemple un rétrécissement entre deux pièces pour y coincer la sangle, un crochet ou un taquet. La partie de la sangle se situant après le moyen de blocage est libre et peut avantageusement être rangée dans une boite sur le coté du véhicule. Selon le nombre de chariots à roulettes placés dans le volume de chargement, la navette 6 est plus ou moins proche de l'ouverture. En déplaçant vers l'arrière la navette par traction sur la sangle 7, l'opérateur place le dernier chariot 10 au plus près de la porte fermée contre une butée fixe, cette butée fixe étant amovible lors du déchargement à quai. De cette façon, les déplacements des files de chariots sont limités à l'avant par la navette et à l'arrière par la dite butée amovible.

Selon un perfectionnement, la rampe 12 permettant de prolonger le plancher du véhicule jusqu'au quai d'embarquement dispose d'un moyen de guidage des roulettes des chariots 10. Des structures rectangulaires 27 sont fixées sur la rampe pour créer des surélévations dont les flancs entrent en contact avec les roulettes et peuvent ainsi les guider. Les deux cotés opposés du rectangle ont un écartement légèrement moins important que celui des roulettes des chariots. L'un au moins des cotés se trouve dans le prolongement du profilé d'un rail de roulement 22 lorsque la rampe est bien positionnée à l'arrière du véhicule. De cette manière, l'opérateur fait rouler le chariot surmonté de caisses sur la rampe pour que ses roulettes se placent de chaque coté de la structure 27. Une fois ce positionnement effectué, l'opérateur continue à pousser l'empilement de caisses vers l'avant du véhicule et les roulettes avant du chariot s'engage naturellement dans le rail de roulement, soit à droite soit à gauche. Avantageusement, le profil de la structure orienté vers l'arrière n'est plus rectangulaire mais biseauté. Ainsi, une seule roulette entre d'abord en contact avec la structure et suit son profil biseauté, puis en continuant d'avancer, la roulette de l'autre coté vient en contact avec l'autre coté de la structure. De cette manière, un défaut de positionnement du chariot se présentant au chargement peut être corrigé naturellement lorsqu'il s'avance sur la rampe puis dans le volume de chargement.

Le compartiment frais 21 est un caisson isotherme ayant des parois 28 d'une épaisseur d'au moins 5 centimètres. Cette épaisseur existe également au niveau du plancher, de sorte que le plancher de ce compartiment se situe à au moins 5 centimètres au dessus de celui du plancher du compartiment ambiant. Pour éviter à l'opérateur de fournir un effort important pour hisser un chariot transportant des caisses, la partie de la rampe 12 face au compartiment frais est inclinée différemment de la partie de la rampe face au compartiment ambiant. La limite entre ces deux parties est représentée par le trait en pointillé 28 visible sur la **Fig. 3****.**

La **Fig. 4** montre la rampe 12 vue de profil et le détail des deux pentes. La rampe possède une première plateforme 30 dont un coté se pose sur le quai d'embarquement 5 et le coté opposé sur le plancher 31 du compartiment frais. La rampe possède également une seconde plateforme 32 dont un coté se pose sur le quai d'embarquement 5 et le coté opposé sur le plancher 33 du compartiment ambiant. La rampe est de préférence réalisée en tôle épaisse, chaque plateforme 30 et 32 est sensiblement rectangulaire et leur liaison (matérialisée par le trait 29) est typiquement triangulaire. La différence d'inclinaison de ces deux parties dépend de l'épaisseur de la paroi isotherme, et de la longueur de la rampe. La rampe coopère avec l'arrière du véhicule pour se positionner de façon que les structures 27 se situe dans le prolongement des rails de roulement 22. L'autre coté de la rampe se pose sur le quai 5 sur une surface permettant des défauts d'alignement du véhicule avec le quai.

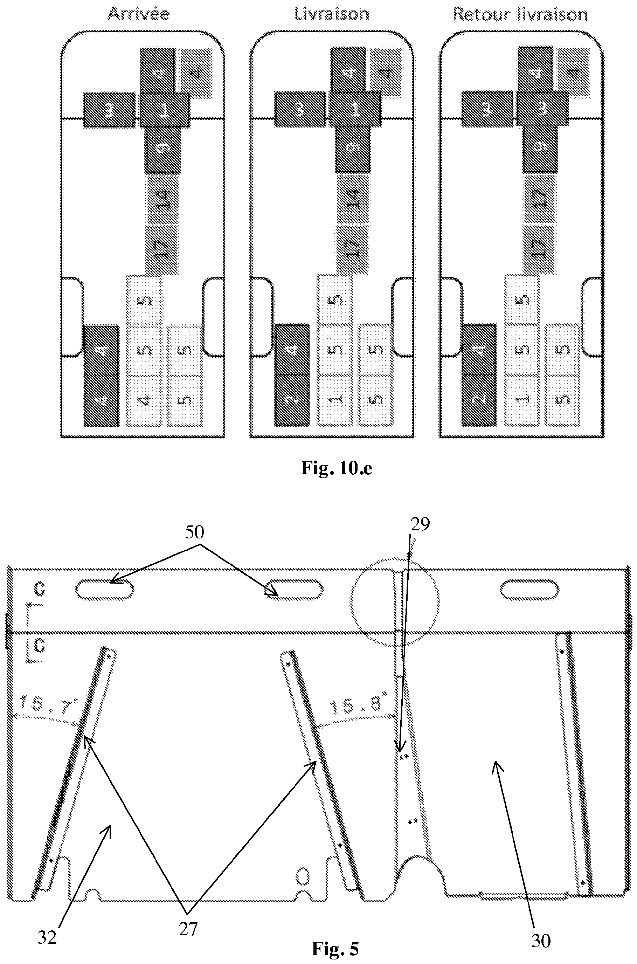

La **Fig. 5** montre les détails d'une rampe vue du dessus selon un exemple de réalisation. Des lumières oblongues 50 sont creusées dans la tôle afin de constituer des poignées, ces poignées se situent sur le coté qui se pose sur le quai. Selon cet exemple de réalisation, les profilés 27 destinés à guider les roulettes des chariot sont des cornières droites soudées directement sur la rampe, chaque file de chariot disposant d'un seul profilé pour guider soit les roulettes droites, soit les roulettes gauches du chariot. La figure présente les deux plateformes 30 et 31 séparées par une liaison triangulaire 29 assurant leur liaison mécanique.

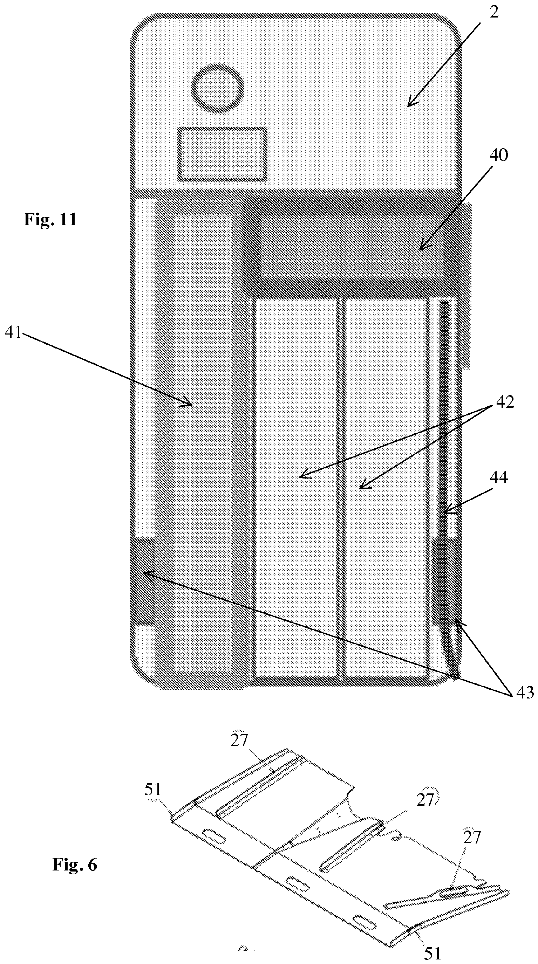

la **Fig. 6** montre les détails d'une rampe vue en perspective selon le même exemple de réalisation. Un rebord surélevé 51 est disposé de chaque coté de la rampe pour éviter la chute des chariot sur les cotés.

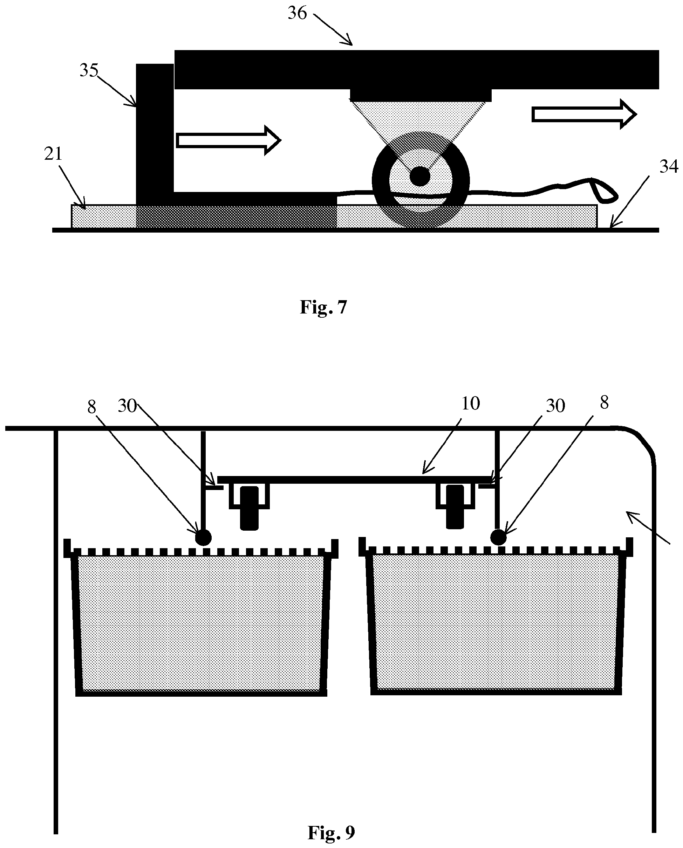

La **Fig. 7** montre un détail de la navette et sa coopération avec les chariots à roulette. La navette 6 glisse dans la rainure 21 vue par transparence, et le chariot 10 roule sur le plancher 34 du compartiment. En tirant la sangle 7, la branche verticale 35 de la navette vient en butée avec l'arête du plateau 36 du chariot. L'ensemble formé par la navette et les chariots se déplace alors dans le sens des flèches.

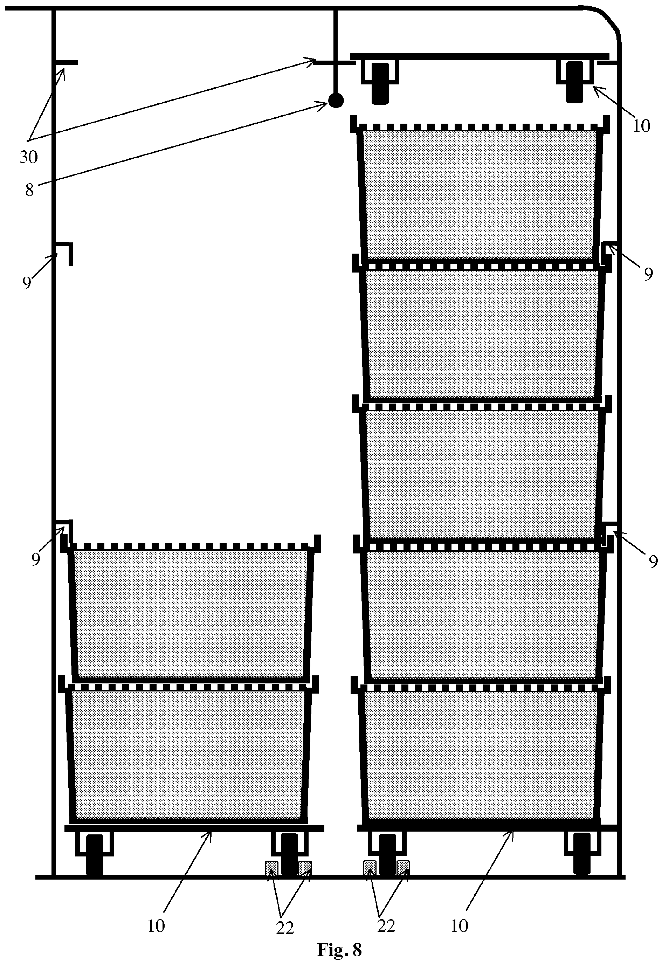

La **Fig. 8** montre les détails des barres anti-devers et des barres de toit destinées à bloquer les caisses stockées dans le compartiment ambiant. L'exemple de réalisation illustré par la **Fig. 8** montre deux files de caisses empilées, posées sur des chariots 10 roulant dans les rails de roulement 22. Les caisses utilisées possèdent un couvercle qui se rabat pour constituer une surface pour supporter la caisse au-dessus. Les charnières du couvercle dépasse en hauteur du couvercle et forme une longeron longitudinal s'étendant sur la longueur de la caisse. Ce longeron est mis à profil pour être aussi utilisé par le système de blocage latéral. A cet effet, les barres anti-devers 9 sont fixées à gauche de la file gauche et à droite de la file droite sur les parois du compartiment. Selon l'exemple de réalisation illustré, les barres anti-devers sont constituées de lèvres s'étendant vers le bas et venant crocheter le longeron de caisses situées à un certain niveau. Il est inutile de maintenir toutes les caisses, dans l'exemple, les caisses du second niveau et du quatrième niveau sont maintenues par des barres anti-devers. Les barres anti-devers s'étendent sur la longueur du compartiment.

Selon un perfectionnement, l'espace libre entre la caisse en haut de l'empilement et le toit du véhicule est utilisé pour le stockage des chariots. Des barres de transport 30 plates sont disposées au dessus des files de chariots et espacées d'une distance inférieure à celles de la largeur d'un chariot et supérieure à celle entre les roues dudit plateau. Les barres de transport 30 qui peuvent accueillir autant de chariots que les files situées en dessous comportent des butées situées aux extrémités avant et arrière qui maintiennent les chariots au cours du transport. L'opérateur extrait les chariots soit par l'arrière, soit par l'avant, en soulevant légèrement les chariots pour les dégager desdites butées.

Les barres de transport 30 du milieu sont accrochées au plafond par un support vertical qui se prolonge vers le bas pour la fixation de la barre de toit 8. Dans le mode de réalisation illustré par la **Fig. 8****,** la barre de toit est placée au milieu du compartiment ambiant et est fixée à une hauteur permettant le blocage des caisses empilées sur la troisième file, celle qui se situe à cheval sur la file droite et la file gauche de ce compartiment. Comme nous le verrons par la suite, cette file est destinée à contenir les caisses vides empilées les unes dans les autres. La hauteur séparant la barre de toit et le plancher est calculée pour être supérieure d'un centimètre environ d'un total comportant la hauteur d'un chariot et d'un certain nombre de caisses empilées. Dans l'exemple de réalisation réalisé, on peut empiler 18 caisses vides sous la barre de toit.

Selon une variante de réalisation illustrée par la **Fig. 9****,** les barres de transport 30 permettent de stocker une seule file de chariots au-dessus de la troisième file. Les barres de transport 30 sont accrochées au plafond par deux supports verticaux qui se prolongent vers le bas pour la fixation de deux barres de toit 8. Selon cette variante de réalisation, les deux barres de toit 8 sont positionnées au dessus des files droite et gauche de chariots et assurent le blocage des caisses sur ces deux files. Dans ce cas, la hauteur séparant ces barres de toit et le plancher est calculée pour être supérieure d'un centimètre environ d'un total comportant la hauteur d'un chariot et d'un certain nombre de caisses pleines empilées. Dans l'exemple de réalisation réalisé, on peut empiler 5 caisses pleines les unes sur les autre.

Selon un perfectionnement, la barre de toit 8 est montée sur au moins 2 biellettes articulées, la barre s'abaisse et est mise en position avec la fermeture de porte du véhicule. La barre 8 peut être de type crémaillère pour servir d'appui à un cliquet installé sur la structure de retenue du premier empilement.

Selon un autre perfectionnement, le compartiment frais est d'une hauteur inférieure à celui du compartiment ambiant. Cette différence de hauteur est mise à profit par l'installation d'un tiroir au-dessus du compartiment frais. Ce tiroir permet le stockage de sacs et de petits objets.

### 6.4 Description d'un mode de chargement du véhicule

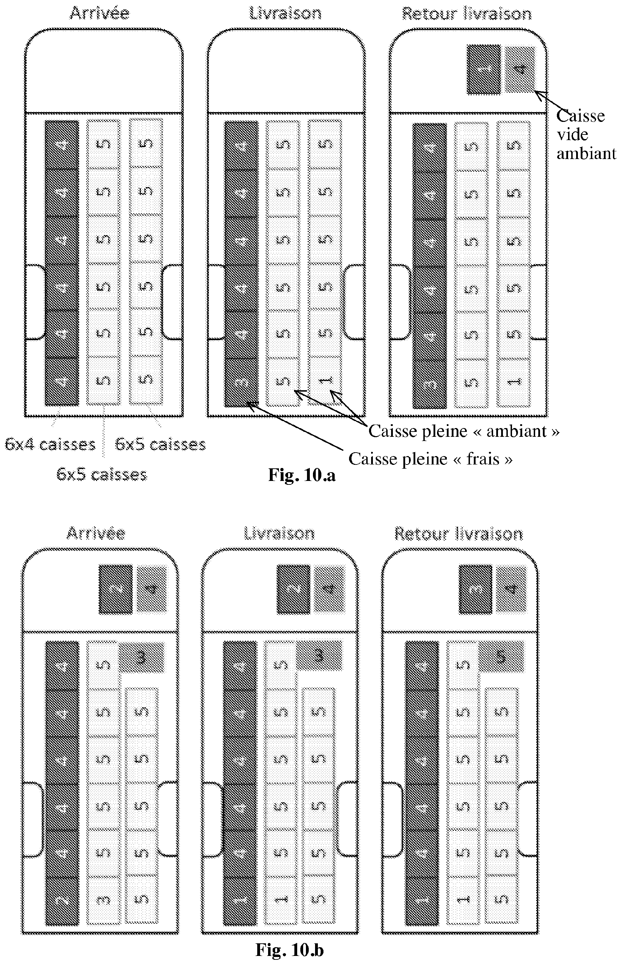

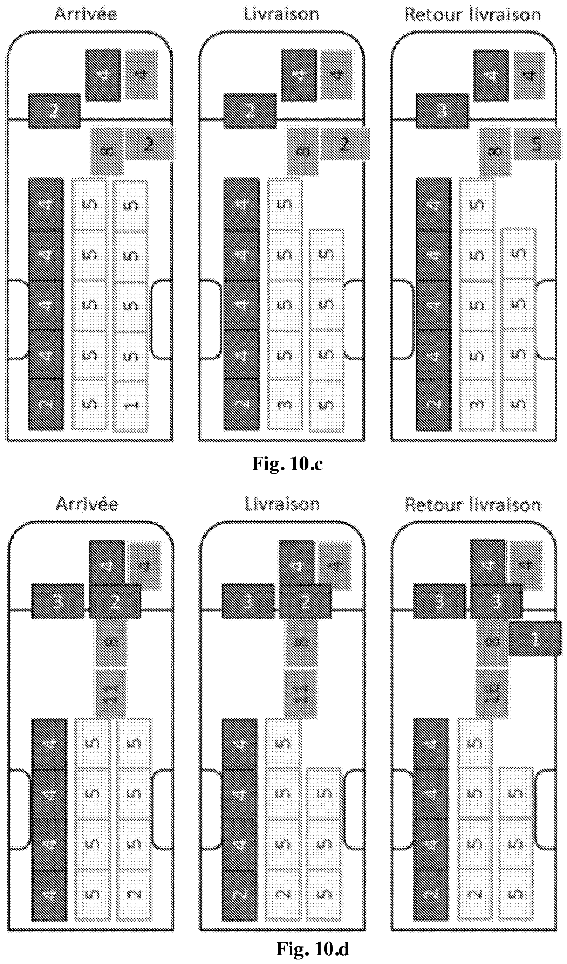

Après avoir décrit les différents équipements du véhicule objet de l'invention, nous allons maintenir décrire un exemple de procédure de déchargement de caisses. L'exemple de procédure comporte les étapes illustrées par les **Fig. 10****.a, 10.b, 10.c 10.d** et **10.e.**

Selon cet exemple, la cabine abritant le conducteur est surmonté d'un logement accessible à partir du volume de chargement et notamment du compartiment ambiant. Selon cet exemple, le véhicule dispose d'une porte sur le coté permettant un accès latéral au compartiment ambiant.

Chaque figure illustre trois moments d'une livraison, ces moments étant représentés par les états des caisses dans le compartiment. L'image de gauche représente l'état à l'arrivée d'une livraison, l'image au centre représente l'état des caisses après que l'opérateur ait extrait celles destinées à être livrées. La figure de droite représente l'état après récupération par l'opérateur des caisses vides et juste avant le départ pour la livraison suivante. Les caisses vides provenant du compartiment ambiant sont emboitées les unes dans les autres et peuvent constituer un empilement de 17 caisses. 17 caisses empilées et emboitées sur un chariot constituent une hauteur légèrement inférieure à la hauteur de la barre de toit 8 ce qui bloque l'empilement lors du transport et évite son basculement dans une direction ou une autre. Les caisses vides provenant du compartiment frais ne peuvent s'emboiter les unes dans les autres. La position des caisses représentée par l'image de droite montre une disposition optimale en terme de maintien, cet état assure qu'au cours du transport, des caisses ne basculeront pas.

Au début de l'étape 10.a, le véhicule 1 est rempli d'un maximum de caisses. Le compartiment ambiant comporte deux files de 6 chariots, chaque chariot supportant un empilage de 5 caisses. 60 caisses sont donc contenues dans le compartiment ambiant. Le compartiment frais comporte une file de 6 chariots, chaque chariot supportant un empilage de 4 caisses. 24 caisses sont donc contenues dans le compartiment frais. Lors de l'étape 10.a, le contenu d'une caisse du compartiment frais et les contenus de quatre caisses du compartiment ambiant sont livrés, les contenus des caisses situées dans la file droite sont prioritairement livrés. A la fin de l'étape 10.a, les cinq caisses vides sont rangées dans le logement au-dessus du conducteur en les passant par la porte latérale.

Au début de l'étape 10.b, l'opérateur a livré un certain nombre de contenus de caisse et a avancé de la longueur d'un chariot la file droite du compartiment ambiant. La place ainsi libérée à l'avant de cette file permet de stocker 3 caisses vides. Lors de l'étape 10.b, le contenu d'une caisse du compartiment frais et les contenus de deux caisses du compartiment ambiant sont livrés. A la fin de l'étape 10.a, les deux caisses vides sont rangées à l'avant de la file droite en les passant par la porte latérale.

Au début de l'étape 10.c, l'opérateur a livré un certain nombre de contenus de caisse et a avancé les trois files de la longueur d'un chariot. La place ainsi libérée à l'avant des deux files permet de stocker 10 caisses vides. 8 de ces caisses vides sont empilées sur la troisième file du compartiment ambiant. Ces 8 caisses vides sont calées par les deux files de caisses pleines. Lors de l'étape 10.b, les contenus de trois caisses du compartiment ambiant sont livrés, et la file droite a avancé de la longueur d'un chariot. A la fin de l'étape 10.a, les trois caisses vides sont rangées à l'avant de la troisième file en les passant par la porte latérale.

Au début de l'étape 10.d, les files droites et gauches du compartiment ambiant ont avancé de la longueur de deux chariots. La place ainsi libérée à l'avant des deux files permet de stocker deux empilements de caisses vides sur la troisième file du compartiment ambiant. Ces deux empilements de caisses vides sont calés par les deux files de caisses pleines. Lors de l'étape 10.d, les contenus de deux caisses du compartiment frais et les contenus de cinq caisses du compartiment ambiant sont livrés. Les contenus des caisses du compartiment ambiant sont extraits des files droite et gauche et, la file droite a avancé de la longueur d'un chariot. A la fin de l'étape 10.d, les cinq caisses vides sont rangées à l'avant de la troisième file en les passant par la porte latérale. Les deux empilements de caisses vides sont calés par la file gauche, évitant ainsi des basculements intempestifs.

Au début de l'étape 10.e, les files droite et gauche du compartiment ambiant ont avancé de la longueur de trois chariots. La place ainsi libérée à l'avant des deux files permet de stocker trois empilements de caisses vides sur la troisième file du compartiment ambiant. Un empilement concerne uniquement des caisses issues du compartiment frais. Un autre empilement atteint la taille maximale, cet empilement est notamment bloqué par la barre de toit. Ces trois empilements de caisses vides sont calés par la file gauche de caisses pleines. Lors de l'étape 10.e, les contenus de deux caisses du compartiment frais et les contenus de trois caisses du compartiment ambiant sont livrés. A la fin de l'étape 10.e, les trois caisses vides sont rangées à l'avant sur le second empilement de la troisième file. L'opérateur dispose donc d'une zone tampon qui permet d'une part de stocker des caisses vides et d'autre part, de trier les caisses destinées au frais et les caisses destinées au milieu ambiant. Afin de les différencier plus efficacement, les caisses destinées au frais sont de couleur bleu et les caisses destinées au milieu ambiant sont vertes.

Les figures 10.a à 10.e illustrent un procédé de déchargement où les piles de caisses sont extraites par l'arrière du véhicule lors de la livraison et où les caisses vides sont placées à l'avant du véhicule par les portes latérales. De cette manière le livreur ne monte jamais dans le véhicule ce qui facilite sa livraison. Lors du départ le véhicule est constitué d'un ensemble de piles de caisses pleines chargées à partir d'un quai et automatiquement maintenue lors du transport. Lors du retour de tournée, le véhicule est constitué d'un ensemble de piles de caisse vides maintenue lors du transport et qui peuvent être déchargées facilement à partir d'un quai.

### 6.5 Variante sur l'organisation des compartiments du véhicule

Selon une variante de réalisation illustrée par la **Fig. 11****,** le volume utile de chargement est divisé en une pluralité de compartiments. Selon l'exemple illustré, le véhicule utilitaire 1 est équipé de 3 types de compartiments placés à des températures différentes : un compartiment 40 maintenu à une température de congélation (-20°C), un compartiment 41 maintenu à une température fraiche (2 à 4 °C), et le reste 42 du volume de chargement mis à la température ambiante, et éventuellement réfrigéré légèrement (par exemple 15°C). Le compartiment 40 est entouré d'une isolation thermique renforcée (par exemple une épaisseur en mousse de 60 millimètres) et d'une porte isotherme performante. Il est disposé transversalement et accessible par la porte latérale coulissante 45 du véhicule. Le générateur de froid est placé au-dessus de ce compartiment et contre la cloison de séparation entre la cabine et la zone de chargement. Un volume libre est laissé au-dessus du compartiment 40 de congélation pour y ranger des cartons de fruits et légumes par exemple, ou des chariots ou caisses vides. Le compartiment 41 est également entouré d'une isolation thermique et doté d'une porte isotherme qui s'ouvre, de préférence, en même temps que la porte du véhicule. Cette disposition des compartiments permet un chargement et déchargement rapide des caisses, du fait de l'accès par l'arrière pour l'essentiel de la cargaison. Des logements étroits et s'entendant en hauteur sont disponibles au niveau du passage des roues 43. Ces logements peuvent accueillir les chariots 17 vides et/ou le la rampe 12.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier.

## Revendications

1. Véhicule (1) destiné à transporter des caisses dans un volume de chargement (3), lesdits caisses étant empilées sur au moins un chariot à roulettes (10) coopérant avec au moins un rail de roulement (22) fixé sur le plancher pour guider le déplacement dudit chariot, le véhicule comportant au moins un dispositif (6) exerçant une force horizontale sur une file de caisses posées sur au moins un chariot pour les déplacer vers une ouverture du véhicule, le véhicule comportant au moins une barre de toit (8) maintenant en partie supérieure au moins un empilement de caisses posées sur un chariot,
**caractérisé en ce que** le véhicule comporte en outre au moins une barre anti-devers (9) fixée horizontalement sur la longueur d'au moins une paroi intérieure du volume de chargement (3), les caisses présentant au moins un longeron longitudinal s'étendant sur le coté et le dessus, la barre anti-devers venant crocheter ledit longeron par le dessus.

2. Véhicule (1) selon la revendication 1, **caractérisé en ce que** l'au moins une barre de toit est destinée à bloquer un empilement de caisses vides et emboitées les unes dans les autres, la distance entre le plancher du véhicule et ladite barre de toit étant légèrement supérieure à la somme des hauteurs d'un chariot et d'un nombre déterminé de caisses vides et emboitées les unes dans les autres.

3. Véhicule (1) selon la revendication 1, **caractérisé en ce que** l'au moins une barre de toit est destinée à bloquer un empilement de caisses posées les unes sur les autres avec le couvercle refermé, la distance entre le plancher du véhicule et ladite barre de toit étant légèrement supérieure à la somme des hauteurs d'un chariot et d'un nombre déterminé de caisses posées les unes sur les autres avec le couvercle refermé.

4. Véhicule (1) selon la revendication 1, **caractérisé en ce que** l'au moins une barre anti-devers crochète des caisses posées les unes sur les autres avec le couvercle refermé, la hauteur de la barre anti-devers se situant à une hauteur égale à la somme des hauteurs d'un chariot et d'un nombre déterminé de caisses posées les unes sur les autres avec le couvercle refermé.

5. Véhicule (1) selon l'une quelconque des revendications précédentes, **caractérisé en ce que** le dispositif (6) exerçant une force horizontale sur une file de caisses posées sur au moins un chariot est une butée mobile glissant dans un rail de guidage fixé au plancher du volume de chargement (3) et venant en contact avec un chariot ou une caisse posée dessus, ladite mobile se déplaçant à l'aide d'une sangle vers l'ouverture du véhicule.

6. Véhicule (1) selon la revendication 5, **caractérisé en ce qu'**il comporte des éléments de blocage (25) de ladite sangle à proximité de l'ouverture, afin de maintenir en tension la sangle selon une direction longitudinale au véhicule lorsque ladite butée mobile (6) vient en contact avec un chariot ou une caisse posée dessus qui vient lui-même buter contre une butée fixe présente à proximité de l'ouverture du véhicule.

7. Véhicule (1) selon l'une quelconque des revendications précédentes, **caractérisé en ce que** le volume de chargement comporte au moins deux rails de roulement (22) destinés à guider les roulettes soit gauches soit droites de deux files de chariots (10a, 10b).

8. Véhicule (1) selon l'une quelconque des revendications précédentes, **caractérisé en ce qu'**il comporte une rampe d'accès (12) se posant à l'arrière du véhicule afin de prolonger le plancher jusqu'au quai de chargement, la dite rampe d'accès (12) comportant des éléments droits prolongeant l'au moins un rail de roulement (22) présent dans le volume de chargement (3).

9. Véhicule (1) selon la revendication 8, **caractérisé en ce que** le volume de chargement comporte deux parties ayant des planchers à des hauteurs différentes, ladite rampe d'accès étant constituée de deux plateformes, chaque plateforme venant se poser sur chaque plancher des deux parties du volume de chargement et se prolongeant pour se poser sur le quai de chargement, les deux plateformes ayant des pentes différentes pour compenser la différence de hauteur des planchers.

10. Véhicule (1) selon l'une quelconque des revendications précédentes, **caractérisé en ce qu'**il comporte un compartiment ambiant (20) contenant une pluralité de files de caisses, un compartiment frais (21) contenant une seule file de caisses, le dit compartiment frais (21) ayant une hauteur inférieure à la hauteur du compartiment ambiant, et un tiroir placé au dessus du compartiment frais dont le contenu est accessible en le tirant vers l'arrière du véhicule.

11. Procédé de déchargement d'un véhicule (1) défini par l'une quelconque des revendications précédentes, **caractérisé en ce que** ledit véhicule comporte une porte arrière donnant accès à l'arrière des files de caisses et une porte latérale donnant accès à l'avant des files de caisses, le procédé consistant à décharger au moins un empilement de caisses pleines par l'arrière du véhicule, à déplacer au moins une file de caisses vers l'arrière d'au moins la longueur d'un empilement et d'introduire des caisses vides par la porte latérale pour les placer à l'emplacement ainsi libéré à l'avant de la file déplacée.

12. Procédé de déchargement d'un véhicule selon la revendication 11, **caractérisé en ce que** les caisses vides sont emboitées les unes dans les autres formant un empilement ayant un nombre de caisses au moins égal au double du nombre de caisses pleines dans un empilement, la file de caisses vides se plaçant à cheval sur les rails de roulement de deux files de caisses pleines, les empilements de caisses vides étant maintenus par la barre de toit (8).

## Patentansprüche

1. Fahrzeug (1) zum Transportieren von Kisten in einem Laderaum (3), wobei die Kisten auf mindestens einem Rollwagen (10) gestapelt sind, der mit mindestens einer auf dem Boden befestigten Laufschiene (22) zusammenwirkt, um das Verfahren des Wagens zu führen, wobei das Fahrzeug mindestens eine Vorrichtung (6) aufweist, die eine horizontale Kraft auf eine Reihe von Kisten, die auf mindestens einen Wagen gesetzt sind, ausübt, um sie zu einer Öffnung des Fahrzeugs hin zu verfahren, wobei das Fahrzeug mindestens eine Dachstange (8) aufweist, die mindestens einen Stapel von Kisten, die auf einen Wagen gesetzt sind, im oberen Teil hält, **dadurch gekennzeichnet, dass** das Fahrzeug ferner mindestens eine Kippsicherungsstange (9) aufweist, die horizontal über die Länge mindestens einer Innenwand des Laderaums (3) befestigt ist, wobei die Kisten mindestens einen Längsträger aufweisen, der sich an der Seite und der Oberseite erstreckt, wobei die Kippsicherungsstange den Längsträger von oben Längsträger einhakt.

2. Fahrzeug (1) nach Anspruch 1, **dadurch gekennzeichnet, dass** die mindestens eine Dachstange dazu bestimmt ist, einen Stapel leerer und ineinander gesteckter Kisten zu arretieren, wobei der Abstand zwischen dem Boden des Fahrzeugs und der Dachstange geringfügig größer ist als die Summe aus den Höhen eines Wagens und einer bestimmten Anzahl leerer und ineinander gesteckter Kisten.

3. Fahrzeug (1) nach Anspruch 1, **dadurch gekennzeichnet, dass** die mindestens eine Dachstange dazu bestimmt ist, einen Stapel aufeinander gesetzter Kisten mit geschlossenem Deckel zu arretieren, wobei der Abstand zwischen dem Boden des Fahrzeugs und der Dachstange geringfügig größer ist als die Summe aus den Höhen eines Wagens und einer bestimmten Anzahl aufeinander gesetzter Kisten mit geschlossenem Deckel.

4. Fahrzeug (1) nach Anspruch 1, **dadurch gekennzeichnet, dass** die mindestens eine Kippsicherungsstange aufeinander gesetzte Kisten mit geschlossenem Deckel einhakt, wobei die Höhe der Kippsicherungsstange in einer Höhe liegt, die gleich der Summe aus den Höhen eines Wagens und einer bestimmten Anzahl aufeinander gesetzter Kisten mit geschlossenem Deckel ist.

5. Fahrzeug (1) nach einem der vorhergehenden Ansprüche, **dadurch gekennzeichnet, dass** die Vorrichtung (6), die eine horizontale Kraft auf eine Reihe von auf mindestens einen Wagen gesetzten Kisten ausübt, ein beweglicher Anschlag ist, der in einer am Boden des Laderaums (3) befestigten Führungsschiene gleitet und mit einem Wagen oder einer darauf gesetzten Kiste in Kontakt kommt, wobei sich das Mobilteil mithilfe eines Riemens zur Öffnung des Fahrzeugs hinbewegt.

6. Fahrzeug (1) nach Anspruch 5, **dadurch gekennzeichnet, dass** es Elemente zur Arretierung (25) des Riemens in der Nähe der Öffnung umfasst, um den Riemen entlang einer Richtung längs zum Fahrzeug gespannt zu halten, wenn der bewegliche Anschlag (6) mit einem Wagen oder einer darauf gesetzten Kiste in Kontakt kommt, die selbst gegen einen in der Nähe der Öffnung des Fahrzeugs vorhandenen festen Anschlag anschlägt.

7. Fahrzeug (1) nach einem der vorhergehenden Ansprüche, **dadurch gekennzeichnet, dass** der Laderaum mindestens zwei Laufschienen (22) umfasst, die dazu bestimmt sind, entweder die linken oder die rechten Rollen von zwei Wagenreihen (10a, 10b) zu führen.

8. Fahrzeug (1) nach einem der vorhergehenden Ansprüche, **dadurch gekennzeichnet, dass** es eine Zugangsrampe (12) umfasst, die am Heck des Fahrzeugs aufgelegt wird, um den Boden bis zur Laderampe zu verlängern, wobei die Zugangsrampe (12) gerade Elemente umfasst, die mindestens eine im Laderaum (3) vorhandene Laufschiene (22) verlängern.

9. Fahrzeug (1) nach Anspruch 8, **dadurch gekennzeichnet, dass** der Laderaum zwei Bereiche umfasst, die Böden unterschiedlicher Höhen aufweisen, wobei die Zugangsrampe aus zwei Plattformen besteht, wobei jede Plattform auf jeden Boden der beiden Bereiche des Laderaums aufgelegt wird und sich verlängert, um auf die Laderampe aufgelegt zu werden, wobei die beiden Plattformen unterschiedliche Neigungen haben, um den Höhenunterschied der Böden auszugleichen.

10. Fahrzeug (1) nach einem der vorhergehenden Ansprüche, **dadurch gekennzeichnet, dass** es ein Umgebungstemperaturabteil (20), das eine Vielzahl von Kistenreihen enthält, ein Kühlabteil (21), das eine einzige Kistenreihe enthält, wobei das Kühlabteil (21) eine geringere Höhe als das Umgebungstemperaturabteil hat, und einen Auszug aufweist, der über dem Kühlabteil angeordnet ist und dessen Inhalt zugänglich ist, indem er zum Heck des Fahrzeugs hingezogen wird.

11. Verfahren zum Entladen eines Fahrzeugs (1) nach einem der vorhergehenden Ansprüche, **dadurch gekennzeichnet, dass** das Fahrzeug eine Hecktür aufweist, die Zugang zur Rückseite der Kistenreihen bietet, und eine Seitentür, die Zugang zur Vorderseite der Kistenreihen bietet, wobei das Verfahren darin besteht, mindestens einen Stapel voller Kisten vom Heck des Fahrzeugs aus zu entladen, mindestens eine Kistenreihe zum Heck hin um mindestens die Länge eines Stapels zu verfahren und leere Kisten durch die Seitentür einzuführen, um sie an dem so freigewordenen Platz an der Vorderseite der verfahrenen Reihe zu platzieren.

12. Verfahren zum Entladen eines Fahrzeugs nach Anspruch 11, **dadurch gekennzeichnet, dass** die leeren Kisten ineinandergesteckt werden und einen Stapel bilden, aus einer bestimmten Anzahl von Kisten besteht, die mindestens gleich dem Zweifachen der Anzahl voller Kisten in einem Stapel ist, wobei die Reihe leerer Kisten über den Laufschienen von zwei Reihen voller Kisten platziert wird, wobei die Stapel leerer Kisten von der Dachstange (8) gehalten werden.

## Claims

1. Vehicle (1) for transporting boxes in a loading volume (3), said boxes being stacked on at least one trolley (10) with wheels, engaging with at least one guide rail (22) attached to the floor to guide the movement of said trolley, the vehicle comprising at least one device (6) exerting a horizontal force on a row of boxes placed on at least one trolley to move them towards an opening of the vehicle, the vehicle comprising at least one roof bar (8) for holding, at an upper portion, at least one stack of boxes placed on a trolley, **characterised in that** the vehicle further comprises at least one stabiliser bar (9) attached horizontally over the length of at least one internal wall of the loading volume (3), the boxes comprising at least one longitudinal sill extending on the side and on the top, the stabiliser bar hooking onto said sill from the top.

2. Vehicle (1) according to claim 1, **characterised in that** the at least one roof bar is intended to block a stack of empty boxes nested within one another, the distance between the floor of the vehicle and said roof bar being slightly greater than the sum of the heights of a trolley and a determined number of empty boxes placed on top of one another.

3. Vehicle (1) according to claim 1, **characterised in that** the at least one roof bar is intended to block a stack of boxes placed on top of one another with the lid closed, the distance between the floor of the vehicle and said roof bar being slightly greater than the sum of the heights of a trolley and a determined number of boxes placed on top of one another with the lid closed.

4. Vehicle (1) according to claim 1, **characterised in that** the at least one stabiliser bar hooks the boxes placed on top of one another with the lid closed, the height of the stabiliser bar being situated at a height equal to the sum of the heights of a trolley and a determined number of boxes placed on top of one another with the lid closed.

5. Vehicle (1) according to any of the preceding claims, **characterised in that** the device (6) exerting a horizontal force on a row of boxes placed on at least one trolley is a mobile stopper sliding in a guide rail attached to the floor of the loading volume (3) and coming into contact with a trolley or a box placed thereon, said mobile stopper moving by means of a strap towards the opening of the vehicle.

6. Vehicle (1) according to claim 5, **characterised in that** it comprises elements (25) for blocking said strap in proximity to the opening in order to keep the strap under tension in a direction longitudinal to the vehicle when said mobile stopper (6) comes into contact with a trolley or a box placed thereon, which itself abuts against a fixed stopper present in proximity to the opening of the vehicle.

7. Vehicle (1) according to any of the preceding claims, **characterised in that** the loading volume comprises at least two guide rails (22) to guide the wheels of two rows of trolleys (10a, 10b) either to the left or to the right.

8. Vehicle (1) according to any of the preceding claims, **characterised in that** it comprises an access ramp (12) being placed at the rear of the vehicle in order to extend the vehicle floor up to the loading bay, said access ramp (12) comprising straight elements extending the at least one guide rail (22) present in the loading volume (3).

9. Vehicle (1) according to claim 8, **characterised in that** the loading volume comprises two parts having floors at different heights, said access ramp being constituted by two platforms, each platform being placed on each floor of the two parts of the loading volume and being extended so as to be placed on the loading bay, the two platforms having different slopes to compensate for the difference in height between the floors.

10. Vehicle (1) according to any of the preceding claims, **characterised in that** it comprises a compartment (20) at ambient temperature containing a plurality of rows of boxes, one chilled compartment (21) containing a single row of boxes, said chilled compartment (21) having a height lower than the height of the compartment at ambient temperature, and a drawer placed on top of the chilled compartment whose the contents whereof can be accessed by pulling the drawer towards the rear of the vehicle.

11. Method for unloading a vehicle (1) defined by any of the preceding claims, **characterised in that** said vehicle comprises a rear door giving access to the rear of the rows of boxes and a side door giving access to the front of the rows of boxes, the method consisting of unloading at least one stack of full boxes through the rear of the vehicle, of moving at least one row of boxes towards the rear by at least the length of a stack and of inserting empty boxes through the side door to place them in the location thus cleared in front of the moved row.

12. Method for unloading a vehicle according to claim 11, **characterised in that** the empty boxes are nested into one another, forming a stack having a number of boxes at least equal to twice the number of full boxes in a stack, the row of empty boxes being placed so that it straddles the guide rails of two rows of full boxes, the stacks of empty boxes being held by the roof bar (8).
